(19) **Europäisches Patentamt / European Patent Office / Office européen des brevets**

(11) **EP 1 920 902 B1**

(12) **EUROPEAN PATENT SPECIFICATION**

(45) Date of publication and mention
of the grant of the patent:
**20.11.2013 Bulletin 2013/47**

(51) Int Cl.:
**B29C 55/14** (2006.01) **C08J 5/18** (2006.01)
**B29K 67/00** (2006.01)

(21) Application number: **06757067.1**

(22) Date of filing: **06.06.2006**

(86) International application number:
**PCT/JP2006/311328**

(87) International publication number:
**WO 2006/132244 (14.12.2006 Gazette 2006/50)**

(54) **PROCESS FOR PRODUCTION OF A BIAXIALLY ORIENTED POLYESTER FILM**

VERFAHREN ZUR HERSTELLUNG EINER BIAXIAL-ORIENTIERTEN POLYESTERFOLIE

PROCÉDÉ DE PRODUCTION D'UN FILM DE POLYESTER À ORIENTATION BIAXIALE

(84) Designated Contracting States:
**DE FR**

(30) Priority: **09.06.2005 JP 2005169132**

(43) Date of publication of application:
**14.05.2008 Bulletin 2008/20**

(73) Proprietor: **TORAY INDUSTRIES, INC.**
**Tokyo 103-8666 (JP)**

(72) Inventors:
• **KUROUJI, Koji**
**5032305 (JP)**
• **KURIHARA, Tsutomu**
**5032305 (JP)**

• **KAWAJI, Naoki**
**5030877 (JP)**

(74) Representative: **Kador & Partner**
**Corneliusstrasse 15**
**80469 München (DE)**

(56) References cited:
| | |
|---|---|
| **EP-A1- 0 008 679** | **EP-A1- 1 122 051** |
| **EP-A1- 1 207 035** | **GB-A- 957 519** |
| **JP-A- 49 115 169** | **JP-A- 62 158 016** |
| **JP-A- 2000 198 140** | **JP-A- 2001 187 421** |
| **JP-A- 2001 334 569** | **US-A- 4 020 141** |
| **US-A- 5 885 501** | **US-A1- 2003 148 131** |
| **US-A1- 2003 175 537** | **US-B1- 6 197 430** |

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

TECHNICAL FIELD

The present invention relates to a process for producing biaxially oriented polyester film having low heat shrinkage and superior flatness characteristics.

BACKGROUND ART

Polyester film that has been biaxially oriented in vertical and horizontal directions is utilized in a variety of fields due to its superior mechanical characteristics. Among the polyesters than constitute polyester films, in particular polyethylene terephthalate (to be hereinafter referred to as PET) and polyethylene-2,6-naphthalate (to be hereinafter referred to as PEN) have superior mechanical and heat characteristics. In particular, since PET is low-cost, it is used in a wider variety of fields.

Herein, by drawing and orienting the film, strength and other mechanical properties of biaxially oriented polyester film are improved. However, conversely, this distortion is retained in the molecular chains in such biaxially oriented polyester film. By applying heat, this molecular chain distortion is released, and for this reason such film has a tendency of shrinkage.

Typically, these heat shrinkage characteristics lead to many obstacles when using such biaxially oriented polyester film for industrial applications.

Consequently, this molecular chain distortion is released by heat-treating (also referred to as heat setting) the film on a tenter after biaxial drawing. In this case, the heat shrinkage amount typically decreases in accordance with this heat treatment temperature, but ordinarily it was not possible to completely eliminate this distortion via heat treatment alone.

Consequently there are cases wherein, as a method for eliminating this residual distortion, a method is implemented such that the tenter rail width is tapered to slightly shrink the film in the widthwise direction.

However, with this method, residual distortion in the machine direction, i.e., in the lengthwise direction of the film, cannot be eliminated. For this reason, a variety of methods have been hitherto investigated regarding a method of eliminating residual distortion in the lengthwise direction of the film.

For example, a method has been proposed wherein a relaxation process in the lengthwise direction of the film is performed, by causing the film to travel while gradually narrowing the tenter clip interval (cf. Patent Literature 1).

In addition, a method has been proposed wherein, after cooling the stretched film to a temperature of 210°C or less, the film is relaxed not more than 2.5% in the machine direction, and not more than 5.0% in the widthwise direction (cf. Patent Literature 2).

However, in the method of Patent Literature 1, there is the problem that if the relaxation amount is made too large, the pre-relaxation clip interval becomes wider, and the physical irregularity of the portions of the film that grip the clips and do not grip the clips becomes larger.

In addition, there are cases wherein a method is conducted whereby, after winding the film once, the film is slowly unwound while being heat-treated, and during this process different travel speeds are applied in the lengthwise direction of the film, thereby relaxing the film. However, in this method, there is the problem that costs increase to the degree that the relaxation treatment is conducted.

In addition, in the method of Patent Literature 2, there is the problem that it cannot fabricate film that fully satisfies the demand for flatness characteristics, which have particularly increased in recent years.

In other words, in recent years, along with the size increases in flat panel displays, for example, the need has arisen for the optical film used as a material in such displays to be processed having large widths. For this reason, the demands regarding factors such as transport characteristics and distortion at the time of processing have become particularly strict.

Patent Literature 1: Japanese Patent Publication No. Hei 4-28218 (pg. 2)
Patent Literature 2: Japanese Patent Registered No. 3539588 (pgs. 3-5)

Furthermore, US 5,885,501 describes a process for preparing a biaxially stretched thermoplastic film, such as polyethylene naphthalate (PEN) or polyethylene terephthalate (PET) film, having low thermal shrinkages by simultaneous biaxial stretching of the film in a tenter frame using linear electrical motors to drive the tenter clips. The film is relaxed in the machine direction (MD) and the transverse direction (TD) by converging the paths of the tenter clips and decelerating the tenter clips during heat-setting.

EP 0 008 679 describes a process for preparing a polyester film which has not only uniaxially enhanced mechanical properties but also biaxially enhanced mechanical properties. The process involves heat-setting a biaxially oriented polyester film at a temperature above that used for the machine and transverse direction stretching and above that used for the machine direction re-stretching, but at least 10 °C. below the melting point of the polyester, then re-stretching the film in both the machine and transverse directions, and re-heat-setting the film.

DISCLOSURE OF INVENTION

It is an object of the present invention, being devised in the light of the foregoing points, to provide a process for producing biaxially oriented polyester film wherein the unavoidable heat shrinkage characteristics of biaxially oriented polyester film are reduced by a significant degree in the lengthwise direction and the widthwise direction of the film via a low cost process, and additionally, to provide a process for producing biaxially oriented polyester film having superior flatness characteristics and mechanical characteristics. In particular, it is an object to provide a process for producing biaxially oriented polyester film suitable for applications such as flat panel displays.

The process for producing biaxially oriented polyester film of the present invention that achieves the above-described object comprises the following configuration (1).

(1) A process for producing biaxially oriented polyester film according to claim 1.

In addition, regarding the process for producing of the biaxially oriented polyester film of the present invention, more concretely preferable embodiments are given by each of the following configurations (2)-(5).

(2) The process for producing of biaxially oriented polyester film according to the above (1), wherein after the widthwise relaxation, the film is held under said stretching, and subsequently, the lengthwise relaxation is performed.

(3) The process for producing of biaxially oriented polyester film according to the above (1), wherein after the lengthwise relaxation, the film is held under said stretching, and subsequently, the widthwise relaxation is performed.

(4) The process for producing of biaxially oriented polyester film according to any of the above (1)-(3), wherein, the biaxially oriented polyester film is held under said stretching for a time between 2 and 30 seconds.

(5) The process for producing of biaxially oriented polyester film according to any of the above (1)-(4), wherein a material having a laminated structure formed of a resin layer on at least one side is used as the biaxially oriented polyester film, the primary component of the resin layer being one or more resins selected from the group consisting of: polyester resins, acrylic resins, urethane resins, and polyamide resins.

As a result of the process for producing biaxially oriented polyester film of the present invention described above, a biaxially oriented polyester film with low heat shrinkage and superior flatness characteristics can be produced efficiently and also without incurring large additional costs.

The biaxially oriented polyester film obtained via the producing method of the present invention is a highly superior product for which problems in factors such as heat shrinkage characteristics and flatness characteristics do not occur. Utilizing such attributes, this film can be particularly helpful for use as an optical film used as a material in flat panel displays, for example.

BEST MODE FOR CARRYING OUT THE INVENTION

Hereinafter, best mode of the process for producing biaxially oriented polyester film of the present invention will be described in detail.

The process for producing biaxially oriented polyester film of the present invention comprises the following. Heat treatment is performed on a polyester film that has been biaxially oriented in the lengthwise and widthwise directions of the film. Subsequently, the film is subject to relaxation in the widthwise direction, and then to relaxation in the machine direction by a method of shortening the clip interval. Between the widthwise relaxation step and the lengthwise relaxation step, the polyester film is temporarily held under stretching.

The biaxially oriented polyester film used in the present invention refers to a film obtained by drawing in the film machine direction (the lengthwise direction of the film), and in a direction orthogonal to the machine direction (the widthwise direction). Specifically, this refers to film obtained by extruding molten polyester into a sheet to create a materially amorphous film and performing one of the following: drawing the film widthwise after drawing the film lengthwise; or, drawing the film lengthwise after drawing the film widthwise; or, drawing the film simultaneously both lengthwise and widthwise. In addition, this may also refer to a film obtained via a combination of a plurality of iterations of lengthwise drawings and widthwise drawings.

In particular, biaxially oriented polyester film obtained via simultaneous biaxial drawing has less anisotropy compared to biaxially oriented polyester film obtained via consecutive biaxial drawing. In addition, such film has fewer chances to contact the rollers during the polyester film production process compared to those of consecutive biaxial drawing. For this reason, biaxially oriented polyester film obtained via simultaneous biaxial drawing has few surface flaws, and is particularly suitable as the film used in the present invention.

In the method of the present invention, it is necessary to heat-treat the biaxially oriented polyester film in order to impart low heat shrinkage characteristics and flatness characteristics. However, sufficient low heat characteristics and flatness characteristics are typically not obtainable using heat treatment alone. In other words, typically, by cooling from a high temperature state, the thermally-expanded portions at high temperature reversibly shrink as they cool. For this reason, distortions accumulate, and heat shrinkage is imparted in the range approximately from the glass transition temperature to 150°C. At this point, in order to suppress this heat shrinkage, it is important to perform a relaxation process in the tenter during the cooling step that follows the heat treatment step, so as to absorb the reversible shrinkage that accompanies this cooling. At this point, after heat treatment it is important to conduct a widthwise (TD (transverse direction)) relaxation process, wherein the tenter rail width is shortened, and a lengthwise (MD (machine direction)) relaxation process, wherein the clip interval is shortened. However, sufficient low heat shrinkage characteristics and flatness characteristics are not obtainable just by conducting the TD relaxation process and the MD relaxation process simultaneously, or just by conducting the TD relaxation process and the MD relaxation process consecutively.

After thorough investigation, the inventors have found that by (a) after heat treatment of the biaxially oriented polyester film, first relaxing in the TD by shortening the tenter rail width, subsequently holding under stretching the polyester film, and then immediately afterwards relaxing in the MD by shortening the clip interval, a polyester film is obtainable that achieves both low heat shrinkage characteristics and flatness characteristics.

Alternatively, the two relaxation directions described above need not necessarily be conducted in the order described in (a) above. The reverse order may also be conducted, i.e., by (b) after heat treatment of the biaxially oriented polyester film, first relaxing in the MD by shortening the clip interval, subsequently holding under stretching the polyester film, and then immediately afterwards relaxing in the TD by shortening the rail width, a polyester film is similarly obtainable that achieves both low heat shrinkage characteristics and flatness characteristics.

In other words, the inventors have found that by implementing either of the above-described production processes (a) or (b), a biaxially oriented polyester film that achieves both superior low heat shrinkage characteristics and superior flatness characteristics can be produced.

The "widthwise relaxation process" in the above-described process of the present invention refers to the process of shortening the film in the widthwise direction under particular temperature conditions. As described above, this "widthwise relaxation process" may be conducted by shortening the width of the tenter rails along which the film travels while gripping the rails via clips. Alternatively, a temporarily wound film may be placed in a particular temperature environment while in a rolled state. In the method of the present invention, this "widthwise relaxation process" is intended to be a technology conducted while the film continuously travels in the actual film production process. For this reason, shortening the film in the widthwise direction by shortening the width of the tenter rails is the most preferable method in practice.

In addition, the "lengthwise relaxation process" refers to the process of shortening the film in the lengthwise direction under particular temperature conditions. Furthermore, the "lengthwise relaxation by a method of shortening the clip interval" in particular refers to a process of shortening the film in the lengthwise direction on a tenter having a clip interval shortening mechanism, wherein the clip intervals are shortened by gradually slowing the speed of the clips gripping the film. Alternatively, there is a method wherein a temporarily wound film is unwound, and then passed through an oven and re-wound at a speed slower than that of the unwinding speed, that may be used as the "lengthwise relaxation." In addition, there is a method wherein, when taking up the film into a roll at the tenter exit, the speed of taking up the roll is made slower than the speed at which film is supplied from the tenter exit. In the method of the present invention, this "lengthwise relaxation" is intended to be a technology conducted while the film continuously travels in the actual film production process. Furthermore, in the method of performing relaxation at the tenter exit, it is typically difficult to control the temperature of the film during the relaxation process. For these reasons, shortening the film in the lengthwise direction by shortening the clip interval is the most preferable method in practice.

Since these relaxation processes are performed after the heat treatment process, the relaxation processes are to be conducted under the conditions that the temperature is not less than 80°C, and additionally, that the temperature is not more than the heat treatment temperature.

In addition, in the process of the present invention, the "holding under stretching" of the biaxially oriented polyester film, provided as an intermediate step between conducting the two relaxation steps described above, refers to transporting the film inside the oven without shortening or lengthening the tenter rail width in the TD, and additionally, without shortening or lengthening the clip interval in the MD. Consequently, this holding does not include any holding under the conditions such as those applying to the above-described relaxation processes, or such as those applying to the drawing process that are referred to in the present invention, regardless of the stretched state of the film. In other words, the case wherein the tenter rail width is shortened or lengthened in the TD, or alternatively, the case wherein the clip interval is shortened or lengthened in the MD, is not applicable to the "under stretching" referred to in the present invention, regardless of how much stretching force is being applied with respect to the film.

In addition, the "holding" of "holding under stretching" is intended to be a technology conducted while the film continuously travels in the actual film production process. For this reason, causing the film to travel inside a tenter, held by clips, with a fixed rail width in the TD and a fixed clip interval in the MD, is the method in practice.

In addition, this "holding under stretching" is to be conducted under the conditions that the temperature is between the respective temperature conditions of the relaxation processes, and without sudden or radical temperature changes with respect to the temperature conditions of the relaxation in the TD and the temperature conditions of the relaxation in the MD. Consequently, it is important that the relaxation processes and the "holding under stretching" be conducted as the film travels through a single tenter.

In the process of the present invention, the time for the holding under stretching is not less than 2 seconds. By holding under stretching for such times, the above-described relaxation process in the TD and the relaxation process in the MD can be conducted to more fully realize the expected advantages of the present invention.

Although the film holding time varies according to the film travel speed and the zone length of the holding under stretching zone, it is preferable that the upper bound of the holding time be effectively set to 30 seconds.

In the present invention, in order to satisfy the heat shrinkage characteristics and flatness characteristics of the biaxially oriented polyester film, the MD relaxation ratio is preferably taken to be between 0.5% and 5%, and more preferably, between 1% and 2%.

The "MD relaxation ratio" herein refers to the percentage shortening of the center-to-center distance lengthwise of one unit of clips or other regularly-arranged gripping apparatus. Taking Vi as the film transport speed immediately before the commencement of relaxation in the lengthwise direction, and Vf as the film transport speed immediately after relaxation in the lengthwise direction has ceased, this value is represented by equation (1).

$$\text{MD relaxation ratio (\%)} = \{ (\text{Vi} - \text{Vf})/\text{Vi} \} \times 100 \qquad (1)$$

In addition, the TD relaxation ratio is preferably taken to be between 1% and 12%, and more preferably, between 3% and 8%.

The "TD relaxation ratio" herein refers to the percentage shortening of the film in the widthwise direction. Taking Li as the film width immediately before the commencement of relaxation in the widthwise direction, and Lf as the film width immediately after relaxation in the widthwise direction has ceased, this value is represented by equation (2).

$$\text{TD relaxation ratio (\%)} = \{ (\text{Li} - \text{Lf})/\text{Li} \} \times 100 \qquad (2)$$

The heat treatment temperature is preferably between 215°C and 255°C, and more preferably, between 225°C and 245°C. The temperature at which the TD relaxation and the MD relaxation cease is preferably between 200°C and 80°C, and more preferably, between 160°C and 120°C.

In the process of the present invention, since the holding under stretching time is not less than 2 seconds, the TD relaxation and the MD relaxation can be reliably separated. Thus there is no interference between the TD relaxation and the MD relaxation, and the molecular chain distortion in the TD and the molecular chain distortion in the MD can be released. Although there still exist some unclear points regarding the exact mechanism, the molecular distortions in both directions can be effectively released, and for this reason the heat shrinkage characteristics can be considered to have been significantly improved.

Hypothetically, if the TD relaxation and the MD relaxation are conducted simultaneously, then according to the inventors' knowledge, the MD relaxation process would yield almost no advantages. As a result, since the heat shrinkage characteristics in the MD would be hardly lowered, this method is not preferable.

Cases wherein the holding under stretching time is 30 seconds or more are also conceivable, as a result of either the holding under stretching zone being long, or alternatively, the membrane formation speed being slow. However, the former case is not preferable because the oven is unnecessarily lengthened, leading to increased energy costs. The latter case is not preferable because productivity declines.

The thickness of the biaxially oriented polyester film obtained via the biaxially oriented polyester film producing process of the present invention is not particularly limited. However, suitable thicknesses for applications in optical films or other such industrial materials are preferably between 50 μm and 500 μm, and more preferably, between 70 μm and 360 μm.

Consequently, when producing film for use as a material in industrial applications, it is preferable to produce a biaxially oriented polyester film having a thickness between 50 μm and 500 μm, and more preferably, between 70 μm and 360 μm.

The haze value of the biaxially oriented polyester film obtained via the biaxially oriented polyester film producing process of the present invention is preferably not more than 5%, and in addition, the total light transmission should be not less than 86%. More preferably, the haze value is not more than 3%, and in addition the total light transmission is not less than 88%. Even more preferably, the haze value is not more than 1%, and in addition the total light transmission is not less than 90%.

When the haze value and the total light transmission value are within the ranges described above, the film is suitable for use as a material in industrial applications such as optical film. The haze value can be controlled by appropriately changing the additive rate of particles added to the film base material. In addition, the total light transmission can be controlled via the particle additive rate as above, and by appropriately changing the formula of the materials used in the coating layer.

In addition, the respective MD and TD shrinkage ratios of the biaxially oriented polyester film obtained by the producing process of the present invention are preferably not more than 0.8%, and more preferably, not more than 0.5%, and even more preferably, not more than 0.3%. These values are to be taken as those after leaving the film in a free state for 30 minutes at a temperature of 150°C (dry heat).

The "MD shrinkage ratio" referred to herein is the value given by the following. The film is marked at two points separated by an interval of length $L_{MDO}$ in the MD, and then processed for 30 minutes inside an oven heated to a temperature of 150°C. Taking $L_{MD}$ to be the marking interval as measured after the film has fully cooled at room temperature (23°C) and at a relative humidity of 65%, the value is given by the following equation:

$$\text{MD shrinkage ratio (\%)} = \{\,(\,L_{MDO} - L_{MD}\,)\,/\,L_{MDO}\,\} \times 100$$

The "TD shrinkage ratio" referred to herein is the value given by the following. The film is marked at two points separated by an interval of length $L_{TDO}$ in the TD, and then processed for 30 minutes inside an oven heated to a temperature of 150°C. Taking $L_{TD}$ to be the marking interval as measured after the film has fully cooled at room temperature (23°C) and at a relative humidity of 65%, the value is given by the following equation:

$$\text{TD shrinkage ratio (\%)} = \{\,(\,L_{TDO} - L_{TD}\,)\,/\,L_{TDO}\,\} \times 100$$

Hereinafter, the polyester film used in the present invention will be generally described. The polyester constituting the polyester film used in the present invention is a polymer obtained by a condensation polymerization of a diol and a dicarboxylic acid. The dicarboxylic acid is typified by terephthalic acid, isophthalic acid, phthalic acid, naphthalene dicarboxylic acid, adipic acid, and sebacic acid. In addition, the diol is typified by ethylene glycol, trimethylene glycol, tetramethylene glycol, and cyclohexanedimethanol.

Specifically, polymethylene terephthalate, polyethylene terephthalate, polytetramethylene terephthalate, polyethylene-p-oxybenzoate, poly-1,4-cyclohexanedimethalene terephthalate, and polyethylene-2,6-naphthalate are given by way of example as such polyesters. Needless to say, these polyesters may be either homopolymers or copolymers. Copolymer structural units may for example comprise diol units, such as diethylene glycol, neopenthal glycol, and polyalkaline glycol, or dicarboxylic acid units, such as adipic acid, sebacic acid, phthalic acid, isophthalic acid, and 2,6-naphthalene dicarboxylic acid.

In the case of the present invention, from considerations such as mechanical strength, heat resistance, chemical resistance, and durability, polyethylene terephthalate and polyethylene-2,6-naphthalate are particularly preferable. Among these two, polyethylene terephthalate is the more preferable to be used due to its low cost.

In addition, various additives, such as anti-oxidants, antistatic agents, crystal nucleators, inorganic particles, and organic particles may be added to these polyesters as needed.

In addition, in the present invention, it is preferable that the polyester film have a laminated structure. This laminated structure may be achieved by lamination by polymer co-extrusion, or by lamination wherein a liquid coating is applied to the polyester film base material. For the latter, the step wherein the liquid coating is applied may be chosen to be conducted before the drawing of the polyester film base material, during the drawing step, or after drawing and heat treatment have been conducted. However, if conducted before drawing or during the drawing step, this step will be conducted as part of the film production process, and therefore is omitted herein for the sake of brevity.

A variety of application methods may be used as the method for applying a liquid coating on the polyester film base material, such as the reverse coat method, the gravure coat method, the rod coat method, the bar coat method, the Mayer bar coat method, the die coat method, and the spray coat method. Although not particularly limited, in consideration of evenness and adhesiveness of the application of the coating membrane (resin layer) formed by application, a corona discharge may also be performed in advance on the surface of the polyester film base material.

These laminated structures are primarily conducted in order to impart surface characteristics according to application. For example, it is possible to impart characteristics such as ready adhesiveness with ink or toner, or antistatic properties to suppress static electricity.

In addition, in the case where the biaxially oriented polyester film of the present invention is to be used as an optical film substrate, it is necessary for the film to have superior adhesiveness with the materials used in post-treatments such as prism lens treatments, hard coat treatments, and anti-reflective treatments.

In order to improve the adhesiveness between the adhesing materials of such post-treatments and the polyester film, it is preferable to provide upon at least one side of the biaxially oriented polyester film a polymer adhesive layer (resin layer) comprising a compound whose primary component is at least one resin selected from the group consisting of: polyester resins, acrylic resins, urethane resins, and polyamide resins. Various additives may also be added to these polymer adhesives, such as anti-oxidants, crystal nucleators, inorganic particles, and organic particles. In particular, porous silica is effective, since its refractive index is close that of the resin of the adhesive layer, it imparts slipperiness to the film surface while retaining transparency, and improves handling of the polyester film. A polymer adhesive layer (resin layer) such as this preferably has a thickness in the range of 10-150 nm.

Next, an example of the biaxially oriented polyester film producing process of the present invention will be described for the case wherein polyethylene terephthalate is used as the polyester. However, the present invention is not to be limited to such an example, and conditions such as the drying conditions, extruding conditions, and drawing temperatures will vary according to the type of resin.

In other words, by way of example, following typical methods, a terephthalic acid and an ethylene glycol are esterified, or alternatively, terephthalic acid dimethyl and an ethylene glycol are ester-interchanged, thereby obtaining bis-$\beta$-hydroxyethyl terephthalate (BHT). Subsequently, this BHT is transferred to a curing tank, and, while mixing, is heated to a temperature of 280°C under vacuum to promote polymerization reactions. At this point, the mixing torque is detected, and the reaction is ended when the torque reaches a set point. From the curing tank, the polyethylene terephthalate is discharged in a gut string shape, and after being water cooled is cut into pellets. Subsequently, the polyethylene terephthalate pellets polymerized in this manner are vacuum dried for 5 hours at 180°C, then fed into an extruder heated to a temperature in the range 270-300°C, and extruded from a T-die into a sheet shape. This molten sheet is then adhesed to and solidified by static electricity on a drum cooled to a drum surface temperature of 25°C, thereby obtaining a materially amorphous molded polyester film. This molded polyester film is heated on a set of heat rollers at a temperature in the range 70°C -120°C, drawn 2-6 times original size in the lengthwise direction in one stage or in multiple stages, and then cooled on a set of rollers at a temperature in the range 20°C -50°C. Subsequently, one or both sides of this uniaxially oriented polyester film are coated as necessary with a liquid coating using a bar coater, the liquid coating comprising a compound whose primary component is a resin such as a polyester resin, thereby forming a polymer adhesive layer. Subsequently, the film is led to a tenter, and as both edges of the uniaxially oriented polyester film are gripped by clips, the film is heated in a hot air blow environment that has been heated to a temperature in the range 80°C - 140°C, and drawn 2.5-6 times original size in the widthwise direction.

In the production process of the present invention herein, heat treatment at a high temperature is conducted on the biaxially oriented polyester film. In the case of polyethylene terephthalate, this temperature is preferably between 215°C and 255°C, and more preferably, between 225°C and 245°C, wherein the heat treatment is conducted under conditions of fast warm-up and over a short time. Subsequently, in the case of the foregoing method (a), the following exemplary process is conducted after heat treatment. First, the TD relaxation process is conducted by the method of shortening the tenter rail width. Subsequent to this step, the film is held in a holding under stretching zone wherein the rail width and the clip interval are kept fixed not less than 2 seconds. After the holding step, the MD relaxation process is conducted by the method of shortening the tenter clip interval as the clips grip the film. Alternatively, in the case of the foregoing method (b), the following exemplary process is conducted after heat treatment. First, the MD relaxation process is conducted by the method of shortening the tenter clip interval as the clips grip the film. Subsequent to this step, the film is held in a holding under stretching zone wherein the rail width and the clip interval are kept fixed, not less than 2 seconds. After the holding step, the TD relaxation process is conducted by the method of shortening the tenter rail width. As a result of the present invention, by performing this series of processes, the heat shrinkage ratio of the biaxially oriented polyester film produced thereby can be suppressed to a low value, and in addition, a biaxially oriented polyester film having superior flatness characteristics can be obtained.

Examples

Hereinafter, the polyester film production process of the present invention will be concretely described based on exemplary embodiments.

The methods used in the present invention for evaluating various physical characteristic values are described below.

Methods for evaluating physical characteristic values

(1) Heat shrinkage ratio at 150°C, 30 min.

A sample 10mm in width and approx. 250mm in length is taken of the film, and marked by crosses at intervals of approx. 200mm. This interval, given as Lo(mm), is accurately measured using a length measuring machine combining a general purpose projector, mfg. by Nikon Corporation, and a linear scale (accuracy 0.001mm), mfg. by Mitutoyo Corporation. This sample is processed for 30 minutes in an oven heated to a dry temperature of 150°C, and after being subsequently fully cooled at room temperature (23°C) and at a relative humidity of 65%, the marking interval is again measured with the length measuring machine and given as L (mm). The heat shrinkage is calculated as heat shrinkage ratio = (Lo - L) $\times$ 100/$L_0$ (%), and the average value of five samples is adopted.

(2) Flatness characteristics

The film is cut to A2 size and placed outspread upon a level table. Above this film (20cm above the film surface), a single string is stretched in a significantly long, straight line. Viewed from directly above the film, this string appears to be stretched in a straight line connecting the midpoint of the short edge on one end of the film to the midpoint of the short edge on the other end of the film. By changing the viewing angle while observing the reflected image of the string reflected in this film, the condition of the string's reflected image as it passes over the entire surface of the film is observed. Flatness characteristics are then evaluated using the degree of curvature exhibited by the reflected string. The standards for evaluation are as follows.
Film for which curved portions are not visible over the entire surface is judged "excellent", and indicated by the symbol "○" in Table 2 below.
Film having curved portions in two locations or less over the entire surface is judged "good", and indicated by the symbol "○" in Table 2.
Film having curved portions in three locations or less over the entire surface is judged "somewhat poor", and indicated by the symbol "Δ" in Table 2. Film having curved portion in four or more locations over the entire surface is judged "poor", and indicated by the symbol "x" in Table 2.

(3) Haze and total light transmission

Measurements of haze and total light transmission were conducted after leaving the film (sample) for 2 hours under normal conditions (temperature 23°C, relative humidity 65%), using the fully automatic direct reading haze computer HGM-2DP, mfg. by Suga Test Instruments. The average values of three measurements were taken as the haze and total light transmission values of the sample.

(4) MD relaxation ratio and TD relaxation ratio

As already described in this specification, the MD relaxation ratio is the value given by the following equation (1), wherein Vi is taken to be the film transport speed immediately before the commencement of relaxation in the lengthwise direction, and Vf is taken to be the film transport speed immediately after relaxation in the lengthwise direction has ceased.

$$\text{MD relaxation ratio (\%)} = \{ ( Vi - Vf ) / Vi \} \times 100 \qquad (1)$$

As already described in this specification, the TD relaxation ratio is the value given by the following equation (2), wherein Li is taken to be the film width immediately before the commencement of relaxation in the widthwise direction, and Lf is taken to be the film width immediately after relaxation in the widthwise direction has ceased.

$$\text{TD relaxation ratio (\%)} = \{ ( Li - Lf ) / Li \} \times 100 \qquad (2)$$

Example 1

Polyethylene terephthalate pellets having a limiting viscosity of 0.65 are vacuum dried for 5 hours at a temperature of 180°C, subsequently fed into an extruder heated to a temperature in the range 270°C -300°C, and molded into a sheet from a T-die. This sheet material is then adhesed to and solidified by static electricity on a drum cooled to a drum surface temperature of 25°C, thereby obtaining an unoriented polyester film. The unoriented polyester film is heated with a set of heat rollers at a temperature in the range 70°C -100°C, vertically drawn to 3.4 times original size in the vertical direction in a single stage, and then cooled on a set of rollers at a temperature in the range 20°C -50°C. Using a bar coater, both sides of this uniaxially oriented polyester film are coated with a 6$\mu$m-thick water-soluble polyester resin liquid coating that is 4.5% of water by weight and includes a slipperiness solution (colloidal silica solution with particle diameter 0.1μm and 0.5% solid by weight). Subsequently, the film is led to a tenter at a speed of 40m/min., and as both ends of the coated polyester film are gripped by clips, the film is pre-heated in a hot air blow environment heated to a temperature of 90°C, and then drawn to 3.6 times original size in the widthwise direction in a hot air environment at a temperature of 100°C.

The biaxially oriented polyester film obtained in this way is then subsequently heat treated as-is in the tenter at a temperature of 230°C. After the heat treatment, a 4% relaxation in the TD is then performed by shortening the tenter rail width in a slow cooling zone that cools the film from 230°C to 200°C. In the subsequent holding under stretching zone of zone length 3m, the rail width and the clip interval are maintained for a holding under stretching time of 4.5 seconds. Subsequently, a 2.0% relaxation in the MD is performed by shortening the tenter clip interval at a temperature of 150°C. Subsequently, the film is taken out of the tenter, both edges of the polyester film are trimmed, and the film is rolled, thereby obtaining a biaxially oriented polyester film having a thickness of 125μm.

The foregoing production conditions are summarized in Table 1. The physical properties of the obtained polyester film are shown in Table 2, and indicate that a biaxially oriented polyester film having a low heat shrinkage ratio and superior flatness characteristics was obtained.

Example 2

Similarly to example 1, a biaxially oriented polyester film, having been drawn vertically, coated, drawn horizontally, and transported at a speed of 40m/min., is then heat treated at a temperature of 250°C. After the heat treatment, a 4% relaxation in the TD is then performed by shortening the tenter rail width in a slow cooling zone that cools the film from 250°C to 220°C. In a subsequent holding under stretching zone of zone length 3m, the rail width and the clip interval are maintained for 4.5 seconds. Subsequently, a 2.0% relaxation in the MD is performed by shortening the tenter clip interval at a temperature of 150°C. Subsequently, the film is taken out of the tenter, both edges of the polyester film are trimmed, and the film is rolled, thereby obtaining a biaxially oriented polyester film having a thickness of 125μm.

The foregoing production conditions are summarized in Table 1. The physical properties of the obtained biaxially oriented polyester film are shown in Table 2, and indicate that a biaxially oriented polyester film having a low heat shrinkage ratio and superior flatness characteristics was obtained.

Example 3

Similarly to example 1, a biaxially oriented polyester film, having been drawn vertically, coated, drawn horizontally, and transported at a speed of 40m/min., is then heat treated at a temperature of 230°C. After the heat treatment, a 4% relaxation in the TD is then performed by shortening the tenter rail width in a slow cooling zone that cools the film from 230°C to 200°C. In a subsequent holding under stretching zone of zone length 3m, the rail width and the clip interval are maintained for 4.5 seconds. Subsequently, a 2.0% relaxation in the MD is performed by shortening the tenter clip interval at a temperature of 130°C. Subsequently, the film is taken out of the tenter, both edges of the polyester film are trimmed, and the film is rolled, thereby obtaining a biaxially oriented polyester film having a thickness of 125μm.

The foregoing production conditions are summarized in Table 1. The physical properties of the obtained biaxially oriented polyester film are shown in Table 2, and indicate that a biaxially oriented polyester film having a low heat shrinkage ratio and superior flatness characteristics was obtained.

Example 4

Similarly to example 1, a biaxially oriented polyester film, having been drawn vertically, coated, drawn horizontally, and transported at a speed of 40m/min., is then heat treated at a temperature of 230°C. After the heat treatment, a 4% relaxation in the TD is then performed by shortening the tenter rail width in a slow cooling zone that cools the film from 230°C to 200°C. In a subsequent holding under stretching zone of zone length 1.5m, the rail width and the clip interval are maintained for 4.5 seconds. Subsequently, a 1.5% relaxation in the MD is performed by shortening the tenter clip interval at a temperature of 150°C. Subsequently, the film is taken out of the tenter, both edges of the polyester film are trimmed, and the film is rolled, thereby obtaining a biaxially oriented polyester film having a thickness of 125μm.

The foregoing production conditions are summarized in Table 1. The physical properties of the obtained biaxially oriented polyester film are shown in Table 2, and indicate that a biaxially oriented polyester film having a low heat shrinkage ratio and superior flatness characteristics was obtained.

Example 5

Similarly to example 1, a biaxially oriented polyester film, having been drawn vertically, coated, drawn horizontally, and transported at a speed of 20m/min., is then heat treated at a temperature of 230°C. After the heat treatment, a 4% relaxation in the TD is then performed by shortening the tenter rail width in a slow cooling zone that cools the film from 230°C to 200°C. In a subsequent holding under stretching zone of zone length 3m, the rail width and the clip interval are maintained for 9.0 seconds. Subsequently, a 2.0% relaxation in the MD is performed by shortening the tenter clip interval at a temperature of 150°C. Subsequently, the film is taken out of the tenter, both edges of the polyester film are trimmed, and the film is rolled, thereby obtaining a biaxially oriented polyester film having a thickness of 350µm.

The foregoing production conditions are summarized in Table 1. The physical properties of the obtained biaxially oriented polyester film are shown in Table 2, and indicate that a biaxially oriented polyester film having a low heat shrinkage ratio and superior flatness characteristics was obtained.

Example 6

Using a bar coater, both sides of an undrawn polyester film obtained similarly to example 1 are coated with a liquid coating comprising a compound similar to that of example 1. The film is then drawn 3.3 times original size in the vertical direction and 3.5 times original size in the horizontal direction using a simultaneous biaxial drawing machine. The film, transported at a speed of 40m/min., is heat treated at a temperature of 230°C. After the heat treatment, a 2.0% relaxation in the MD is then performed by shortening the clip interval in a slow cooling zone that cools the film from 230°C to 210°C. In a subsequent holding under stretching zone of zone length 3m, the rail width and the clip interval are maintained for 4.5 seconds. Subsequently, a 4% relaxation in the TD is performed by shortening the tenter rail width at a temperature in a slow cooling zone that cools the film from 210°C to 180°C. Subsequently, the film is taken out of the tenter, both edges of the polyester film are trimmed, and the film is rolled, thereby obtaining a biaxially oriented polyester film having a thickness of 125µm.

The foregoing production conditions are summarized in Table 1. The physical properties of the obtained biaxially oriented polyester film are shown in Table 2, and indicate that a biaxially oriented polyester film having a low heat shrinkage ratio and superior flatness characteristics was obtained.

Reference Example 7 (not according to claim 1)

Similarly to example 1, a biaxially oriented polyester film, having been drawn vertically, coated, drawn horizontally, and transported at a speed of 40m/min., is then heat treated at a temperature of 230°C. After the heat treatment, a 4% relaxation in the TD is then performed by shortening the tenter rail width in a slow cooling zone that cools the film from 230°C to 200°C. In a subsequent holding under stretching zone of zone length 1.0m, the rail width and the clip interval are maintained for 1.5 seconds. Subsequently, a 2.0% relaxation in the MD is performed by shortening the tenter clip interval at a temperature of 150°C. Subsequently, the film is taken out of the tenter, both edges of the polyester film are trimmed, and the film is rolled, thereby obtaining a biaxially oriented polyester film having a thickness of 125µm.

The foregoing production conditions are summarized in Table 1. The physical properties of the obtained biaxially oriented polyester film are shown in Table 2, and indicate that a biaxially oriented polyester film having a low heat shrinkage ratio and superior flatness characteristics was obtained.

Example 8

Similarly to example 1, a biaxially oriented polyester film, having been drawn vertically, coated, drawn horizontally, and transported at a speed of 40m/min., is then heat treated at a temperature of 230°C. After the heat treatment, a 4% relaxation in the TD is then performed by shortening the tenter rail width in a slow cooling zone that cools the film from 230°C to 200°C. In a subsequent holding under stretching zone of zone length 3m, the rail width and the clip interval are maintained for 4.5 seconds. Subsequently, a 2.5% relaxation in the MD is performed by shortening the tenter clip interval at a temperature of 150°C. Subsequently, the film is taken out of the tenter, both edges of the polyester film are trimmed, and the film is rolled, thereby obtaining a biaxially oriented polyester film having a thickness of 125µm.

The foregoing production conditions are summarized in Table 1. The physical properties of the obtained biaxially oriented polyester film are shown in Table 2, and indicate that a biaxially oriented polyester film having a low heat shrinkage ratio and superior flatness characteristics was obtained.

Example 9

Similarly to example 1, a film is drawn vertically. Using a bar coater, both sides of this uniaxially oriented polyester film are coated with a 6µm-thick, water-soluble, acrylic resin liquid coating that is 3.0% of water by weight and includes a slipperiness solution (colloidal silica solution with particle diameter 0.1µm and 0.5% solid by weight). Then, similarly to example 1, the film is horizontally drawn and transported at a speed of 40m/min. This biaxially oriented polyester film is then heat treated at a temperature of 220°C. After the heat treatment, a 4% relaxation in the TD is then performed by shortening the tenter rail width in a slow cooling zone that cools the film from 220°C to 200°C. In a subsequent holding under stretching zone of zone length 3m, the rail width and the clip interval are maintained for 4.5 seconds. Subsequently, a 2.0% relaxation in the MD is performed by shortening the tenter clip interval at a temperature of 150°C. Subsequently, the film is taken out of the tenter, both edges of the polyester film are trimmed, and the film is rolled, thereby obtaining a biaxially oriented polyester film having a thickness of 125μm.

The foregoing production conditions are summarized in Table 1. The physical properties of the obtained biaxially oriented polyester film are shown in Table 2, and indicate that a biaxially oriented polyester film having a low heat shrinkage ratio and superior flatness characteristics was obtained.

Reference Example 10 (not according to claim 1)

Similarly to example 1, a film is drawn vertically. Using a bar coater, both sides of this uniaxially oriented polyester film are coated with a 6μm-thick, water-soluble, urethane resin liquid coating that is 4.5% of water by weight and includes a slipperiness solution (colloidal silica solution with particle diameter 0.1μm and 0.5% solid by weight). Then, similarly to example 1, the film is horizontally drawn and transported at a speed of 90m/min. This biaxially oriented polyester film is then heat treated at a temperature of 230°C. After the heat treatment, a 4% relaxation in the TD is then performed by shortening the tenter rail width in a slow cooling zone that cools the film from 230°C to 200°C. In a subsequent holding under stretching zone of zone length 1.5m, the rail width and the clip interval are maintained for 1.0 seconds. Subsequently, a 2.0% relaxation in the MD is performed by shortening the tenter clip interval at a temperature of 150°C. Subsequently, the film is taken out of the tenter, both edges of the polyester film are trimmed, and the film is rolled, thereby obtaining a biaxially oriented polyester film having a thickness of 50μm.

The foregoing production conditions are summarized in Table 1. The physical properties of the obtained biaxially oriented polyester film are shown in Table 2, and indicate that a biaxially oriented polyester film having a low heat shrinkage ratio and superior flatness characteristics was obtained.

Reference Example 11 (not according to claim 1)

Polyethylene terephthalate having a limiting viscosity of 0.65 is used to make base material pellets that are an additive compound having 0.5% by weight calcium carbonate with 0.1μm average particle size. Similarly to example 1, these pellets are drawn vertically, coated, drawn horizontally, and transported at a speed of 90m/min. The biaxially oriented polyester film is then heat treated at a temperature of 230°C. After the heat treatment, a 4% relaxation in the TD is then performed by shortening the tenter rail width in a slow cooling zone that cools the film from 230°C to 200°C. In a subsequent holding under stretching zone of zone length 1.5m, the rail width and the clip interval are maintained for 1.0 seconds. Subsequently, a 1.2% relaxation in the MD is performed by shortening the tenter clip interval at a temperature of 120°C. Subsequently, the film is taken out of the tenter, both edges of the polyester film are trimmed, and the film is rolled, thereby obtaining a biaxially oriented polyester film having a thickness of 50μm.

The foregoing production conditions are summarized in Table 1. The physical properties of the obtained biaxially oriented polyester film are shown in Table 2, and indicate that a biaxially oriented polyester film having a low heat shrinkage ratio and superior flatness characteristics was obtained.

Comparative example 1

Similarly to example 1, a biaxially oriented polyester film, having been drawn vertically, coated, drawn horizontally, and transported at a speed of 40m/min., is then subsequently heat treated in the tenter at a temperature of 230°C. After the heat treatment, the film is gradually cooled to 80°C, without performing relaxation in either the transverse direction or the machine direction. The film is then taken out of the tenter, both edges of the polyester film are trimmed, and the film is rolled, thereby obtaining a biaxially oriented polyester film having a thickness of 125μm.

The foregoing production conditions are summarized in Table 1. The physical properties of the obtained biaxially oriented polyester film are shown in Table 2. Since relaxation processes were not performed, the biaxially oriented polyester film has a high heat shrinkage ratio when compared to that of example 1.

Comparative example 2

Similarly to example 1, a biaxially oriented polyester film, having been drawn vertically, coated, drawn horizontally, and transported at a speed of 40m/min., is heat treated at a temperature of 230°C. After the heat treatment, a 4% relaxation in the TD is performed by shortening the tenter rail width in a slow cooling zone that cools the film from 230°C to 200°C. Subsequently, without providing a holding under stretching zone, a 2.0% relaxation in the MD is performed by shortening the tenter clip interval at a temperature of 150°C. The film is then taken out of the tenter, both edges of the polyester film are trimmed, and the film is rolled, thereby obtaining a biaxially oriented polyester film having a thickness of 125μm.

The foregoing production conditions are summarized in Table 1. The physical properties of the obtained biaxially oriented polyester film are shown in Table 2. and indicate that while the heat shrinkage ratio is low, a biaxially oriented polyester film having poor flatness characteristics was obtained.

Table 1

| | Membrane formation speed (m/min) | Heattreatment temperature (°C) | TD relaxation conditions | | Stretching zone length (m) | Holding under stretching time (sec) | MD relaxation conditions | | Relaxation order |
|---|---|---|---|---|---|---|---|---|---|
| | | | Ratio (%) | Temperature (°C) | | | Ratio (%) | Temperature (°C) | |
| Ex. 1 | 40 | 230 | 4.0 | 230→200 | 3 | 4.5 | 2.0 | 150 | TD→MD |
| Ex. 2 | 40 | 250 | 4.0 | 250→220 | 3 | 4.5 | 2.0 | 150 | TD→MD |
| Ex. 3 | 40 | 230 | 4.0 | 230→200 | 3 | 4.5 | 2.0 | 130 | TD→MD |
| Ex. 4 | 40 | 230 | 4.0 | 230→200 | 3 | 4.5 | 1.5 | 150 | TD→MD |
| Ex. 5 | 20 | 230 | 4.0 | 230→200 | 3 | 9.0 | 2.0 | 150 | TD→MD |
| Ex. 6 | 40 | 230 | 4.0 | 210→180 | 3 | 4.5 | 2.0 | 230→210 | MD→TD |
| Ex. 7* | 40 | 230 | 4.0 | 230→200 | 1 | 1.5 | 2.0 | 150 | TD→MD |
| Ex. 8 | 40 | 230 | 4.0 | 230→200 | 3 | 4.5 | 2.5 | 150 | TD→MD |
| Ex. 9 | 40 | 220 | 4.0 | 220→200 | 3 | 4.5 | 2.0 | 150 | TD→MD |
| Ex. 10* | 90 | 230 | 4.0 | 230→200 | 1.5 | 1.0 | 2.0 | 150 | TD→MD |
| Ex. 11* | 90 | 230 | 4.0 | 230→200 | 1.5 | 1.0 | 1.2 | 150 | TD→MD |
| Comp. Ex. 1 | 40 | 230 | - | - | - | - | - | - | TD→MD |
| Comp. Ex. 2 | 40 | 230 | 4.0 | 230→200 | 0 | 0.0 | 2.0 | 150 | TD→MD |
| * Ex. 7, Ex. 10 and Ex. 11 are Reference Examples not according to claim 1. | | | | | | | | | |

EP 1 920 902 B1

13

Table 2

|  | Thickness (μm) | Haze (%) | Total light transmission (%) | TD heat shrinkage ratio (%) | MD heat shrinkage ratio (%) | Flatness characteristics |
|---|---|---|---|---|---|---|
| Ex. 1 | 125 | 0.4 | 91 | 0.03 | 0.28 | ◎ |
| Ex. 2 | 125 | 0.4 | 91 | 0.00 | 0.26 | ◎ |
| Ex. 3 | 125 | 0.4 | 91 | 0.06 | 0.35 | ◎ |
| Ex. 4 | 125 | 0.4 | 91 | 0.02 | 0.33 | ◎ |
| Ex. 5 | 350 | 0.4 | 91 | 0.03 | 0.27 | ◎ |
| Ex. 6 | 125 | 0.4 | 91 | 0.05 | 0.28 | ◎ |
| Ex. 7* | 125 | 0.4 | 91 | 0.04 | 0.30 | ○ |
| Ex. 8 | 125 | 0.4 | 91 | 0.03 | 0.24 | ○ |
| Ex. 9 | 125 | 0.4 | 91 | 0.17 | 0.30 | ○ |
| Ex. 10* | 50 | 0.4 | 91 | 0.04 | 0.26 | ○ |
| Ex. 11* | 50 | 5.5 | 88 | 0.03 | 0.56 | ○ |
| Comp. Ex. 1 | 125 | 0.4 | 91 | 0.96 | 1.15 | ○ |
| Comp. Ex. 2 | 125 | 0.4 | 91 | 0.02 | 0.30 | Δ |
| * Ex. 7, Ex. 10 and Ex. 11 are Reference Examples not according to claim 1. | | | | | | |

INDUSTRIAL APPLICABILITY

The present invention relates to a process for producing biaxially oriented polyester film having a reduced heat shrinkage ratio and superior flatness characteristics. As such, the process for producing of biaxially oriented polyester film of the present invention is ideally utilized for the production of various industrial materials applications, typified by optical applications such as materials for flat panel displays.

**Claims**

1. A process for producing biaxially oriented polyester film, comprising:

    subjecting a biaxially oriented polyester film, which has been drawn in the lengthwise and widthwise directions and heat-treated, to widthwise relaxation and lengthwise relaxation by a method of shortening the clip interval; wherein the biaxially oriented polyester film is held under stretching inside a tenter, held by clips, with a fixed rail width in the transverse direction (TD) and a fixed clip interval in the machine direction (MD) and the film continuously travels inside said tenter between the widthwise relaxation step and the lengthwise relaxation step and the time for holding under stretching is not less than 2 seconds whereby.
    the "holding under stretching" of the biaxially oriented polyester film, provided as an intermediate step between conducting the two relaxation steps described above, refers to transporting the film inside the oven without shortening or lengthening the tenter rail width in the transverse direction (TD), and additionally, without shortening or lengthening the clip interval in the machine direction (MD).

2. The process for producing biaxially oriented polyester film according to claim 1, wherein:

    after the widthwise relaxation, the film is held under said stretching, and subsequently, the lengthwise relaxation is performed.

3. The process for producing biaxially oriented polyester film according to claim 1, wherein:

after the lengthwise relaxation, the film is held under said stretching, and subsequently, the widthwise relaxation is performed.

**4.** The process for producing biaxially oriented polyester film according to any of claims 1-3, wherein:

the biaxially oriented polyester film is held under said stretching for a time between 2 and 30 seconds.

**5.** The process for producing biaxially oriented polyester film according to any of claims 1-4, wherein:

a material having a laminated structure formed of a resin layer on at least one side is used as the biaxially oriented polyester film, the primary component of the resin layer being one or more resins selected from the group consisting of: polyester-type resins, acrylic-type resins, urethane-type resins, and polyamide-type resins.

**Patentansprüche**

**1.** Ein Verfahren zur Herstellung einer zweiachsig ausgerichteten Polyesterfolie, enthaltend:

das Unterwerfen der zweiachsig ausgerichteten Polyesterfolie, welche der Länge nach und der Breite nach gestreckt und wärmebehandelt wurde, einer Entspannung der Breite nach und einer Entspannung der Länge nach durch eine Methode der Verkürzung des Klammerintervalls;
wobei die zweiachsig ausgerichtete Polyesterfolie in einem Spannrahmen unter Spannung gehalten wird, gehalten durch Klammern, mit einer festen Schienenbreite in der Querrichtung (TD) und einem festen Klammerintervall in der Maschinenrichtung (MD) und wobei der Film fortlaufend innerhalb des Spannrahmens zwischen dem Entspannungsschritt der Breite nach und dem Entspannungsschritt der Länge nach läuft
und die Zeit zum Halten unter Spannung nicht weniger als 2 Sekunden ist, wobei
das "Halten unter Spannung" der zweiachsig ausgerichteten Polyesterfolie, bereitgestellt als ein Zwischenschritt zwischen dem Ausführen der zwei Entspannungsschritte wie oben beschrieben, sich auf das Transportieren des Films innerhalb des Ofens bezieht ohne die Spannrahmenschienenbreite in Querrichtung (TD) zu verkürzen oder zu verlängern, ohne das Klammerintervall in Maschinenrichtung (MD) zu verkürzen oder zu verlängern.

**2.** Verfahren zur Produktion einer zweiachsig ausgerichteten Polyesterfolie gemäß Anspruch 1, worin:

nach der Entspannung in Querrichtung die Folie unter der Spannung gehalten wird und darauffolgend die Entspannung in Längsrichtung durchgeführt wird.

**3.** Verfahren zur Produktion einer zweiachsig ausgerichteten Polyesterfolie gemäß Anspruch 1, worin:

nach der Entspannung in Längsrichtung die Folie unter der Spannung gehalten wird und darauffolgend die Entspannung in Querrichtung durchgeführt wird.

**4.** Verfahren zur Produktion einer zweiachsig ausgerichteten Polyesterfolie gemäß Anspruch 1, worin:

die zweiachsig ausgerichtete Polyesterfolie für eine Zeit zwischen 2 und 30 Sekunden unter der Spannung gehalten wird.

**5.** Verfahren zur Herstellung einer zweiachsig ausgerichteten Polyesterfolie gemäß einem der Ansprüche 1 bis 4, worin:

ein Material, welches eine laminierte Struktur hergestellt aus einer Harzschicht auf mindestens einer Seite besitzt, als die zweiachsig ausgerichtete Polyesterfolie benutzt wird, wobei die primäre Komponente der Harzschicht ein oder mehrere Harze ausgewählt aus einer Gruppe bestehend aus polyesterartigen Harzen, acrylartigen Harzen, urethanartigen Harzen, und polyamidartigen Harzen ist.

**Revendications**

**1.** Procédé pour la production d'un film de polyester à orientation biaxiale, comprenant :

la soumission d'un film de polyester à orientation biaxiale, qui a été étiré dans les directions longitudinale et transversale et thermiquement traité, à une relaxation transversale et une relaxation longitudinale par un procédé de raccourcissement de l'espacement de pinces ;

dans lequel le film de polyester à orientation biaxiale est tenu dans un état étiré à l'intérieur d'une rame, tenu par des pinces, avec une largeur de rail fixe dans la direction transversale (TD) et un espacement de pinces fixe dans la direction de la machine (MD) et le film se déplace en continu à l'intérieur de ladite rame entre l'étape de relaxation transversale et l'étape de relaxation longitudinale

et le temps de maintien sous étirage est de pas moins de 2 secondes lequel

le « maintien sous étirage » du film de polyester à orientation biaxiale, effectué en tant qu'étape intermédiaire entre la conduite des deux étapes de relaxation décrites ci-dessus, se rapporte au transport du film à l'intérieur du four sans raccourcissement ou allongement de la largeur de rail de rame dans la direction transversale (TD), et en outre, sans raccourcissement ou allongement de l'intervalle de pinces dans la direction de la machine (MD).

**2.** Procédé pour la production d'un film de polyester à orientation biaxiale selon la revendication 1, dans lequel :

après la relaxation transversale, le film est tenu sous ledit étirage, et ensuite, la relaxation longitudinale est effectuée.

**3.** Procédé pour la production d'un film de polyester à orientation biaxiale selon la revendication 1, dans lequel :

après la relaxation longitudinale, le film est tenu sous ledit étirage, et ensuite, la relaxation transversale est effectuée.

**4.** Procédé pour la production d'un film de polyester à orientation biaxiale selon l'une quelconque des revendications 1-3, dans lequel :

le film de polyester à orientation biaxiale est tenu sous ledit étirage pendant un temps compris entre 2 et 30 secondes.

**5.** Procédé pour la production d'un film de polyester à orientation biaxiale selon l'une quelconque des revendications 1-4, dans lequel :

un matériau ayant une structure laminée formée d'une couche de résine sur au moins un côté est utilisé en tant que film de polyester à orientation biaxiale, le composant primaire de la couche de résine étant une ou plusieurs résines choisies dans le groupe constitué de : résines de type polyester, résines de type acrylique, résines de type uréthane et résines de type polyamide.

**REFERENCES CITED IN THE DESCRIPTION**

**Patent documents cited in the description**

- JP HEI428218 B
- JP 3539588 B
- US 5885501 A
- EP 0008679 A